# EUROPEAN PATENT APPLICATION

(11) **EP 0 864 786 A1**
(43) Date of publication of application: **16.09.1998**
(21) Application number: 98103576.9
(22) Date of filing: 02.03.1998
(51) Int. Cl.: F16J 15/18

(54) **Improved stuffing box for packing**

(30) Priority: 14.03.1997 IT PD970015 U
(71) Applicant: Dab Pumps S.p.A., 35035 Mestrino (Padova) (IT)
(72) Inventor: Fornasa, Diego, 36040 Sarego, Vicenza (IT)
(74) Representative: Modiano, Guido, Dr.-Ing.

(57) **Abstract**

An improved stuffing box for packing comprising two identical components (11), each component having a half-ring (13) provided with a flange half (14) in which through holes (16, 20) are provided. The two components (11) are mutually coupled so that the flange halves (14) at least partially overlap so as to form, by means of the through holes (16, 20), bushes for engaging fixing bolts and, by means of the half-rings (13), a duct which is suitable to accommodate a shaft.

## Description

The present invention relates to an improved stuffing box for packing.

Conventional valves for adjusting the flow of fluids and turbine machines, especially turbine pumps, require parts which can ensure an effective mechanical seal so as to prevent the escape of the pressurized fluids.

Such fluids can in fact find, at the passage of stems of plungers in valves, or of actuation rods, or at the transmission shaft particularly in the case of turbine pumps, passages from which they can attempt to leak out.

Sealing elements, such as packings with corresponding stuffing boxes, are very widely and commonly used; these stuffing boxes differ from each other according to the sealing shape to which they must adapt, according to the fluid and according to the temperature that said fluid reaches.

From the dimensional point of view, all the structural characteristics, such as for example the thickness and height, of each stuffing box are calculated according to the sealing pressure the stuffing box must apply to the packing.

Up to now, stuffing boxes have commonly been used which are constituted by a monolithic body provided with an axial opening through which the shaft of a turbine pump (or the stem of the shutter, in the case of a valve) is inserted.

The stuffing box is provided with a flange on which through holes are provided to allow it to engage, by means of bolts, the pump body in order to apply the appropriate pressure to the packing.

Such stuffing boxes are usually obtained by pressure die-casting and can be finished by a subsequent machining operation.

Unfortunately there is a severe drawback linked to the use of such a part, due to the need, during ordinary and periodic maintenance of the packing, to be able to perform the necessary replacements and improvements, being affected by restrictions and constraints in moving due to the presence of the stuffing box, whose bulk is a hindrance.

Such stuffing box can in fact at the most be slightly shifted by sliding along the shaft of the turbine pump.

All this obviously limits and complicates the execution of the ordinary maintenance of the packing.

Stuffing boxes have recently become commercially available which are constituted by the assembly of a first part, constituted by a mostly flat portion made of sheet metal and with a through hole suitable to accommodate the turbine pump shaft, with two half-rings which are arranged so as to surround the shaft and are associated with the flat portion.

This last type of stuffing box can be easily moved from the work area, in case of maintenance or replacement of the packing, since the two half-rings can be removed completely, while the sheet metal portion can be slid along the shaft.

Also in this configuration, however, the stuffing box continues to constitute a partial hindrance because it cannot be removed completely and therefore continues to make work difficult for the maintainer of the machine.

Moreover, in the practical use of such a sealing element, the flat portion made of sheet metal has a limited resistance to the pressure loads and to the stresses that the stuffing box must be able to transmit to the packing in order to provide a seal.

The aim of the present invention is to provide an improved stuffing box for packing which solves all the drawbacks mentioned above of conventional stuffing boxes.

Within the scope of this aim, a particular object of the present invention is to provide a stuffing box which can be arranged correctly in the operating position, and optionally removed completely, in a very practical manner and with easily executable operations.

Another object of the present invention is to provide an improved stuffing box for packing which can be positioned and/or removed an unlimited number of times without any danger of damaging the stuffing box or one of the parts with which it is in contact.

Another object of the present invention is to provide a stuffing box for packing which has an adequately strong structure in relation to the thrusts and stresses that it must transmit to the packing.

An important object of the present invention is to provide a stuffing box for packing which can be obtained through a simple and practical production process.

Another object of the present invention is to provide a stuffing box which can be manufactured in practice without requiring particular facilities or specific equipment but by using known technologies and know-how.

Another object of the present invention is to provide a stuffing box for packing which ensures reliability, durability and resistance over time and with prolonged use.

This aim, these objects and others which will become apparent hereinafter are achieved by a stuffing box for packing, characterized in that it comprises two identical components, each component having a half-ring provided with a flange half wherein through holes are provided, said two components being mutually coupled so that said flange halves at least partially overlap so as to form, by means of said through holes, bushes for engaging fixing bolts and, by means of said half-rings, a duct adapted to accommodate a shaft.

Further characteristics and advantages of the present invention will become apparent from the following detailed description of a preferred embodiment thereof, illustrated only by way of non-limitative example in the accompanying drawings, wherein:

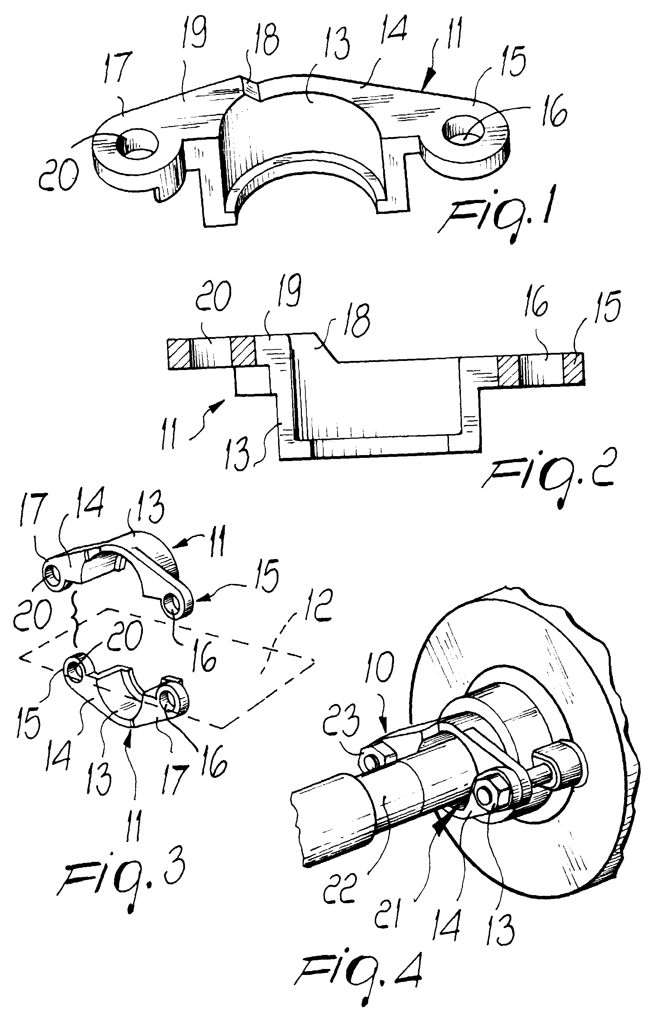

figure 1 is a perspective view of one of the two components of a stuffing box for packing according to the present invention;
figure 2 is a sectional view of the component of figure 1 of a stuffing box for packing according to the invention;
figure 3 is a perspective view of the two components of a stuffing box for packing according to the invention;
figure 4 is a perspective view of a stuffing box for packing according to the invention in its active configuration.

With reference to the above figures, an improved stuffing box for packing, according to the invention, is generally designated by the reference numeral 10 and comprises a first and a second components, designated by the reference numeral 11, which are perfectly identical to each other.

The two components 11 are coupled so as to form the stuffing box 10 and form, by means of their coupling, a plane of symmetry 12.

Each one of the components 11 is constituted by a half-ring 13 provided with a flange half 14.

The flange half 14 runs all around the outside profile of the half-ring 13, with a substantially C-shaped structure, and has, at a first end 15, a first through hole 16 whose center lies on the plane of symmetry 12.

Moreover, the flange half 14 is shaped, at the second end 17, so as to form a step 18 and a flat portion 19 that has the same shape as the flat portion of the first end 15 and wherein, in a symmetrical position with respect to the first through hole 16, a second through hole 20 is provided whose center also lies on the plane of symmetry 12.

The second through hole 20 has the same diameter as the first through hole 16.

The two components 11 must be coupled so that the two half-rings 13, by perfectly mating with each other, can form a duct 21.

The duct 21 is suitable to accommodate a shaft 22 of a turbine pump or a stem of a shutter of a valve, or another equivalent element.

Coupling between the two components 11 occurs by taking care to arrange a first component 11 so that the second through hole 20 (which is raised with respect to the first hole 16) of the second component 11 is superimposed at the first through hole 16 of the first component 11.

The assembly of the two components 11 is stable because each one of the first through holes 16, together with the second through holes 20, which are mutually superimposed in pairs in a crossed configuration, forms a bush for engagement with a bolt 23.

In practice, the second contoured end 17 of a first component 11 must be configured so that the step 18 and the flat portion 19, on which the second through hole 20 is formed, can be coupled by overlap to the corresponding first end 15 of the second component 11 without any play and without interference.

The two components 11 of each stuffing box for packing 10, according to the present invention, can be produced by means of a pressure die-casting process and require no further machining on a finishing machine tool.

Preferably, a stuffing box 10 obtained by assembling two components 11 is made of brass, but it can also be made of a different material, provided that it has suitable characteristics.

It is evident that the present invention achieves in practice the aim and all the intended objects.

In particular, a stuffing box for packing according to the present invention can be placed in the active configuration and removed completely in a very practical manner and with simple operations.

Another advantage is achieved with the present invention by providing an improved stuffing box for packing which can be installed and then removed an unlimited number of times without any danger of damaging the stuffing box, the packing or one of the parts with which the stuffing box is in contact.

A considerable advantage is ensured with the present invention in that a stuffing box for packing has been provided whose structure is strong enough in relation to the stresses and the pressure that it must be able to transmit to the packing.

An important advantage is achieved with the present invention by providing an improved stuffing box for packing which can be produced in practice with a simple and practical production process.

Another advantage is achieved with the present invention by providing a stuffing box for packing which can be manufactured without using special facilities or particular equipment but according to known technologies and know-how.

Another advantage is ensured with the present invention in relation to the fact that a stuffing box for packing has been provided which ensures durability, reliability and resistance over time and with use.

The present invention is susceptible of numerous modifications and variations, all of which are within the scope of the same inventive concept.

The materials employed, as well as the dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A stuffing box for packing, characterized in that it comprises two identical components, each component having a half-ring provided with a flange half wherein through holes are provided, said two components being mutually coupled so that said flange halves at least partially overlap so as to form, by means of said through holes, bushes for engaging fixing bolts and, by means of said half-rings, a duct adapted to accommodate a shaft.

2. A stuffing box for packing according to claim 1, characterized in that each flange half is substantially C-shaped so as to form a first end and a second end in which a first through hole and a second through hole are formed respectively, each one of said second ends being shaped so as to form a step and a raised flat portion.

3. A stuffing box for packing according to claim 2, characterized in that said two components are assembled by producing the crossed overlap of first ends with second raised ends of said two flange halves, said first and second through holes being axially superimposed so as to form said bushes for engaging fixing bolts.

4. A stuffing box for packing according to claim 3, characterized in that each one of said second raised ends of a first flange half is shaped so as to overlap, without play, each one of said first ends of a second flange half.

5. A stuffing box for packing according to claim 2, characterized in that said first and second ends of each flange half have the same shape.

6. A stuffing box for packing according to claim 1, characterized in that said two components are made of pressure die-cast brass or other material.
